# EUROPEAN PATENT SPECIFICATION

(11) **EP 1 291 514 B1**
(45) Date of publication and mention of the grant of the patent: **23.04.2008**
(21) Application number: 02019819.8
(22) Date of filing: 05.09.2002
(51) Int. Cl.: F02D 41/02, F02D 41/40, F02D 41/14, F01N 3/023

(54) **Exhaust emission control device of engine**
Vorrichtung zur Steuerung der Abgasabgabe eines Motors
Dispositif de commande d'émission d'échappement d'un moteur

(30) Priority: 07.09.2001 JP 2001272262; 07.09.2001 JP 2001272263
(43) Date of publication of application: 12.03.2003
(73) Proprietor: MITSUBISHI JIDOSHA KOGYO KABUSHIKI KAISHA, Tokyo 108-8410 (JP)
(72) Inventor: Terada, Mikio, Mitsubishi Jidosha Kogyo K. K., Tokyo (JP); Oohashi, Kazuya, Mitsubishi Jidosha Kogyo K. K., Tokyo (JP); Taniguchi,Hiroki, Mitsubishi Jidosha Kogyo K. K., Tokyo (JP); Hatano, Koyoshi, Mitsubishi Jidosha Kogyo K. K., Tokyo (JP)
(74) Representative: Sajda, Wolf E.

(56) References cited:
- EP-A- 1 203 869
- US-A- 4 211 075
- US-A- 4 719 751
- US-A- 4 747 264
- PATENT ABSTRACTS OF JAPAN vol. 009, no. 235 (M-415), 21 September 1985 (1985-09-21) & JP 60 090931 A (MITSUBISHI JIDOSHA KOGYO KK), 22 May 1985 (1985-05-22)

## Description

The present invention relates to an exhaust emission control device for purifying exhaust gas from a diesel engine.

In particular, the invention relates to a device as defined in the preamble of claim 1. Such a device is known from applicant's previous concept as disclosed in JP-A-60-090 931.

A DPF (diesel particulate filter) of a continuous-regeneration type that uses an oxidizing catalyst and a particulate filter is known as a device for purifying the exhaust gas of a diesel engine. In the purifying device of this type, NO in the exhaust gas is oxidized and changed into NO₂ with the oxidizing catalyst, so that soot (consisting mainly of carbon) in the particulate filter can be burned with NO₂ in a relatively low temperature range.

If excessive soot is deposited on the particulate filter of the continuous-regeneration DPF, the engine output lowers, and besides, the filter may possibly be melted down due to an extraordinarily high temperature as the soot is burned. Accordingly, the particulate filter must be heated up with use of some heat-up means to burn the deposited soot compulsively (for compulsive regeneration) in a timely manner. As is generally known, the compulsive regeneration is achieved by injecting a fuel (for so-called post-injection) in the expansion stroke of the engine, for example.

In carrying out the compulsive regeneration, the timing for its termination must be grasped precisely.

Conventionally, the compulsive regeneration is concluded to have terminated if the difference between pressures in regions before and behind the particulate filter is not greater than a given value or if a predetermined time after the start of the compulsive regeneration is up.

Even in case the particulate filter undergoing the compulsive regeneration is overheated from any cause, in the conventional device described above, however, the regeneration is continued until the differential pressure of the filter becomes not higher than the given value or the preset time is up. Possibly, therefore, the particulate filter may be heated to too high temperature and damaged, or its durability may be adversely affected by the regeneration.

The object of the present invention is to provide an exhaust emission control device capable of preventing a particulate filter from being damaged.

According to the invention the object is solved by a device as specified in claim 1. Further developments thereof are defined in the subclaims.

In order to achieve the above object, an exhaust emission control device of an engine according to the present invention is configured to reduce the quantity of intake air of the engine and interrupt a regeneration process for a particulate filter when a condition for the interruption of the regeneration process is fulfilled.

The nature of this invention, as well as other objects and advantages thereof, will be explained in the following with reference to the accompanying drawings, in which like reference characters designate the same or similar parts throughout the figures and wherein:
FIG. 1 is a schematic view of an engine furnished with an exhaust emission control device according to an embodiment of the invention;
FIG. 2 is a flowchart showing the contents of processing (compulsive regeneration process) of the exhaust emission control device;
FIG. 3 is a flowchart showing the contents of processing (regeneration end discriminating process) of the exhaust emission control device;
FIG. 4 is a diagram showing a map used to obtain a first estimated quantity of deposition of the exhaust emission control device;
FIG. 5 is a diagram showing a map used to obtain a second estimated quantity of deposition of the exhaust emission control device;
FIG. 6 is a diagram showing a map used to obtain a continuous-regeneration region of the exhaust emission control device; and
FIG. 7 is a time chart showing change of the exhaust emission control device with time.

The following is a description of an embodiment of an exhaust emission control device of an engine according to the present invention.

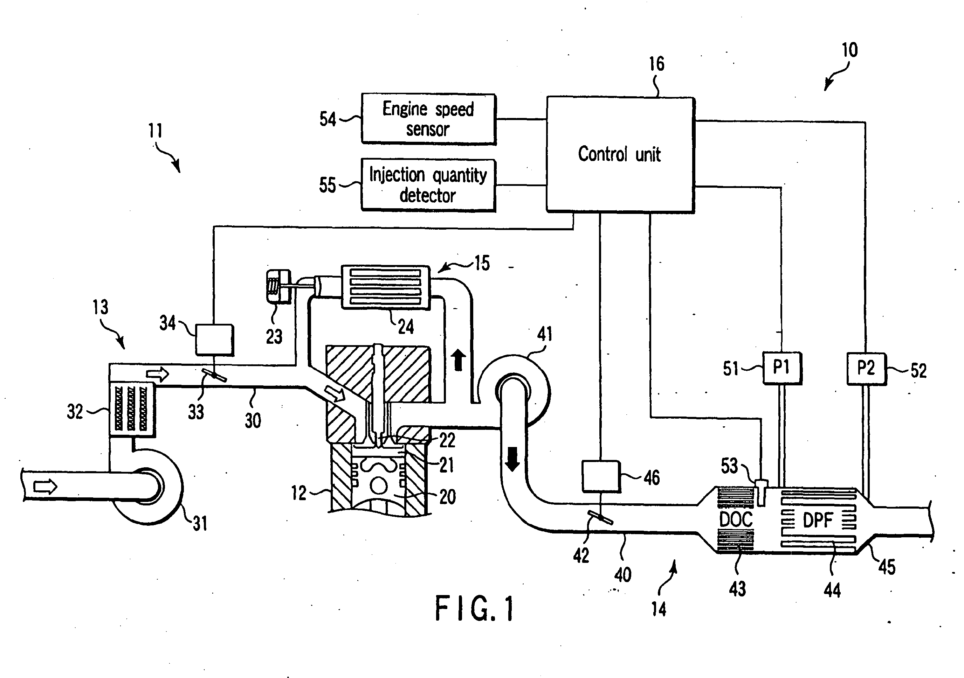

FIG. 1 schematically shows a diesel engine 11 that is furnished with an exhaust emission control device 10. The engine 11 comprises an engine body 12, intake system 13, exhaust system 14, EGR device 15, control unit 16 using a microcomputer and the like, etc. The engine body 12 includes a piston 20, combustion chamber 21, fuel injection valve 22, etc. The EGR device 15 includes an EGR valve 23, EGR cooler 24, etc.

The intake system 13 includes an intake pipe 30, compressor 31, intercooler 32, throttle 33 that serves as intake air quantity reducing means according to this invention, etc. The throttle 33 can change its opening by means of an actuator 34. The exhaust system 14 includes an exhaust pipe 40, turbine 41, shutter 42, oxidizing catalyst 43, particulate filter (hereinafter referred to as filter) 44, envelope 45, etc.

The envelope 45 contains the oxidizing catalyst 43 and the filter 44 therein. The exhaust pipe 40 and the envelope 45 function as an exhaust passage. The catalyst 43 is located on the upper-stream side of the filter 44 in the exhaust passage. The compressor 31 and the turbine 41 rotate integrally with each other. The shutter 42 can change its opening by means of an actuator 46.

First and second pressure sensors 51 and 52 are arranged on the upper- and lower-stream sides, respectively, of the filter 44, in order to detect the difference between pressures in regions before and behind the filter 44. The sensors 51 and 52 constitute an example of differential pressure detecting means.

A temperature sensor 53 as an example of temperature detecting means according to this invention is located between the oxidizing catalyst 43 and the filter 44. The temperature sensor 53 has a function to detect the filter inlet temperature or the exhaust gas temperature of a region just on the upper-stream side of the filter 44.

The control unit 16 is composed of electronic components, such as a microprocessor, having a computing function, and includes a memory that stores maps M1 and M2. The control unit 16 is connected with an engine speed sensor 54 as an example of operating state detecting means and an injection quantity detector 55. The operating state detecting means may include means for detecting the quantity of intake air and/or exhaust gas air-fuel ratio, besides the engine speed sensor 54.

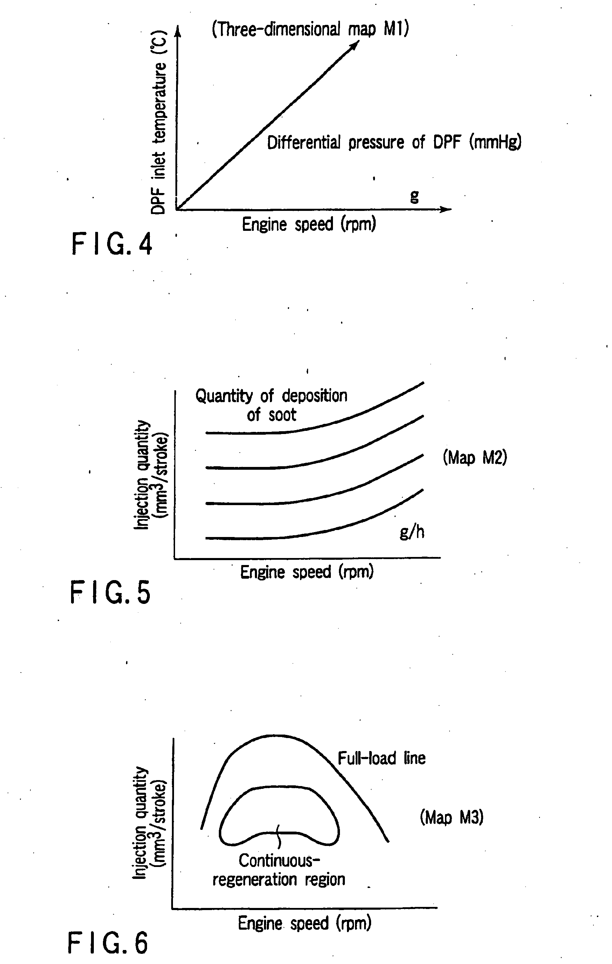

The control unit 16 estimates the quantity of deposition (catch) of soot (particulates) captured by the filter 44. In order to estimate the quantity of deposition, a logic for estimating a first estimated quantity of deposition (a) of soot in the filter 44 by the use of a three-dimensional map (differential pressure map) M1 shown in FIG. 4 is programmed into the control unit 16. This three-dimensional map M1 is prepared by previously obtaining and mapping relations between a differential pressure detected by means of the pressure sensors 51 and 52, exhaust gas temperature (inlet temperature) near the filter 44 detected by means of the temperature sensor 53, engine speed detected by means of the engine speed sensor 54 formed of a crank sensor and the like, and quantity of soot deposition. The control unit 16 obtains the first estimated quantity of deposition (a) in accordance with detected values from the pressure sensors 51 to 54 and the map M1.

Further, a logic for estimating a second estimated quantity of deposition (b) by the use of a map M2 shown in FIG. 5 is programmed into the control unit 16. The map M2 is prepared by previously obtaining and mapping relations between an engine speed detected by means of the engine speed sensor 54, injection quantity delivered from the injection quantity detector 55 formed of an accelerating position sensor, and quantity of soot deposition (cumulative value obtained after the termination of the preceding cycle of compulsive regeneration). The control unit 16 obtains the second estimated quantity of deposition (b) in accordance with the map M2.

Further, the control unit 16 has a logic to determine whether or not the operating state of the engine 11 is within a region such that the filter 44 can be continuously regenerated by the use of a map M3 shown in FIG. 6. The map M3 is prepared by previously obtaining and mapping relations between the engine speed, injection quantity, and region for continuous regeneration. Whether or not the operating state of the engine 11 is within the region for the continuous regeneration of the filter 44 is determined according to the map M3. The line in the map M3 represents the full-load characteristic.

The following is a description of the operation of the exhaust emission control device 10.

The exhaust emission control device 10 can continuously burn soot deposited in the filter 44 with NO₂ that is continuously formed by means of the oxidizing catalyst 43 when the engine is in a given operating state. This state is a continuous regeneration mode.

During the continuous regeneration, the NO component in the exhaust gas is oxidized and changed into NO₂ with the oxidizing catalyst 43, and soot in the filter 44 can be burned in a relatively low temperature range (e.g., about 270°C to 350°C) with the NO₂. The oxygen conversion efficiency of the oxidizing catalyst 43 has its maximum in a certain temperature range (e.g., conversion peak temperature range of 300°C and thereabout). If the exhaust gas temperature is within this temperature range, therefore, soot is burned with NO₂ without any control, so that continuous regeneration can be effected.

If the exhaust gas temperature is lower (e.g., about 250°C) than values in the peak temperature range, control (continuous regeneration support process) is carried out to raise the temperature of the oxidizing catalyst 43 to the peak temperature range, in order to enhance the conversion factor of the catalyst 43. The continuous regeneration support process is achieved by, for example, working the throttle 33 or the shutter 42 to some extent to increase the exhaust gas temperature.

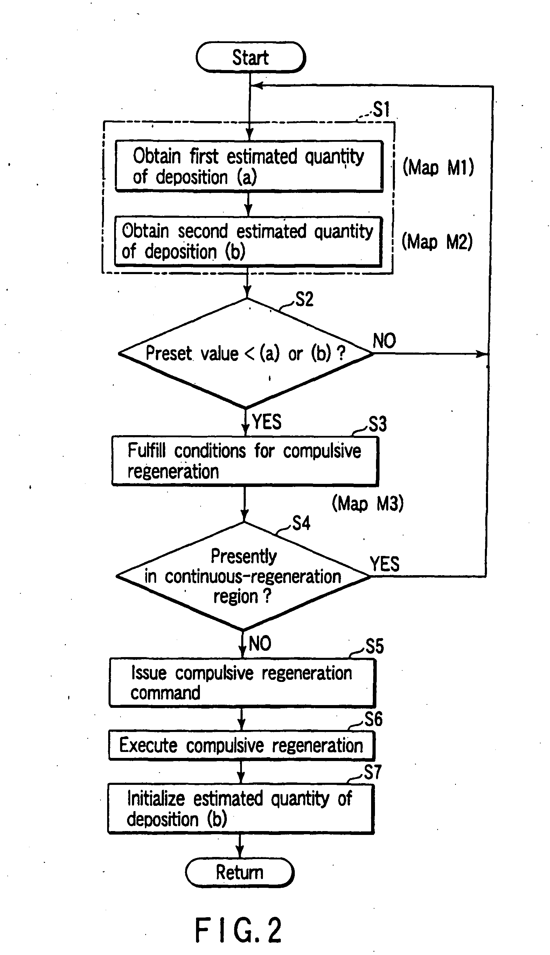

Further, the control unit 16 executes a compulsive regeneration process according to the flowchart of FIG. 2.

First, in Step S1, the first and second estimated quantities of deposition (a) and (b) are obtained with use of the differential pressure map M1 and the map M2, respectively.

Then, whether or not a preset value (e.g., 25 g) is exceeded by the first and second estimated quantities of deposition (a) and (b) is determined in Step S2. If the preset value is exceeded by neither of the estimated quantities of deposition (a) and (b), it is concluded that compulsive regeneration is unnecessary. If it is found in Step S2 that the preset value is exceeded by at least one of the estimated quantities of deposition (a) and (b), it is concluded in Step S3 that conditions for the compulsive regeneration are fulfilled.

If the compulsive regeneration conditions are fulfilled, the operating state of the engine 11 may possibly transfer to the region (continuous-regeneration region) for the continuous regeneration of the filter 44 afterward. In Step S4, therefore, whether or not the operating state of the engine 11 is in the continuous-regeneration region at this point in time is determined according to the map M3. If it is found that the operating state is in the continuous-regeneration region or that the engine 11 is in the aforesaid given operating state, it is concluded that compulsive regeneration is unnecessary. Thus, transition to a compulsive regeneration mode is prohibited, and continuous regeneration is carried out.

If it is concluded in Step S4 that the operating state of the engine 11 is not in the continuous-regeneration region, the control unit 16 issues a compulsive regeneration command in Step S5. Thereupon, the filter 44 is compulsively regenerated in Step S6. In the compulsive regeneration, post-injection is carried out as an example of heat-up means.

The post-injection is additional injection such that a fuel is injected into the combustion chamber 21 through the fuel injection valve 22 in the expansion or exhaust stroke of the engine body 12. The fuel injected by the post-injection reaches the oxidizing catalyst 43, whereupon its HC component is oxidized with the catalyst 43. The filter 44 is heated up by heat release that is caused by the oxidation in the oxidizing catalyst 43, and soot on the filter 44 is oxidized (burned) directly with O₂ in a temperature range (e.g., 500°C to 550°C or more) higher than the range for continuous operation. The fuel (HC) that is not consumed by the oxidizing catalyst 43 adheres to the soot on the filter 44, whereupon combustion is activated further.

Thus, when the post-injection is carried out, the component (HC) to be oxidized with the oxidizing catalyst is supplied to the catalyst, and the filter 44 is heated up with heat of oxidation as the component is oxidized with the catalyst. Thereupon, the soot on the filter 44 is burned and removed to regenerate the filter 44.

When the compulsive regeneration is carried out, the second estimated quantity of deposition (b) is initialized in Step S7, and its integration is started.

In the exhaust emission control device 10 of this embodiment, as described above, the estimated quantities of deposition (a) and (b) of two types with different qualities are used so that compulsive regeneration is carried out when the preset value is exceeded by at least one of them. The first estimated quantity of deposition (a) is based on the differential pressure detected by means of the pressure sensors 51 and 52 at the point of time (time of detection of the differential pressure) when whether or not to carry out compulsive regeneration is determined. Accordingly, the quantity of soot deposition can be estimated without being influenced by the past history of the operating state of the engine before the determination.

On the other hand, the second estimated quantity of deposition (b) is based on an integrated value obtained during the time interval that elapses from the instant that the preceding cycle of compulsive regeneration is finished until a time immediately before the last determination. If the pressure sensors 51 to 55 go wrong and lose their functions at the point of time of the determination, therefore, an estimated quantity of deposition to serve as a criterion for decision on whether or not to carry out compulsive regeneration can be obtained in accordance with the integrated value obtained so far.

In the exhaust emission control device 10, transition to the compulsive regeneration mode is prohibited if the engine is in the given operating state for continuous regeneration after it is detected that the preset value (e.g., 25 g) is exceeded by the estimated quantity of soot deposition. Thus, a long interval can be secured for the compulsive regeneration, so that the load on the filter 44 can be lessened by lowering the frequency of compulsive regeneration, and the compulsive regeneration can avoid wasting energy.

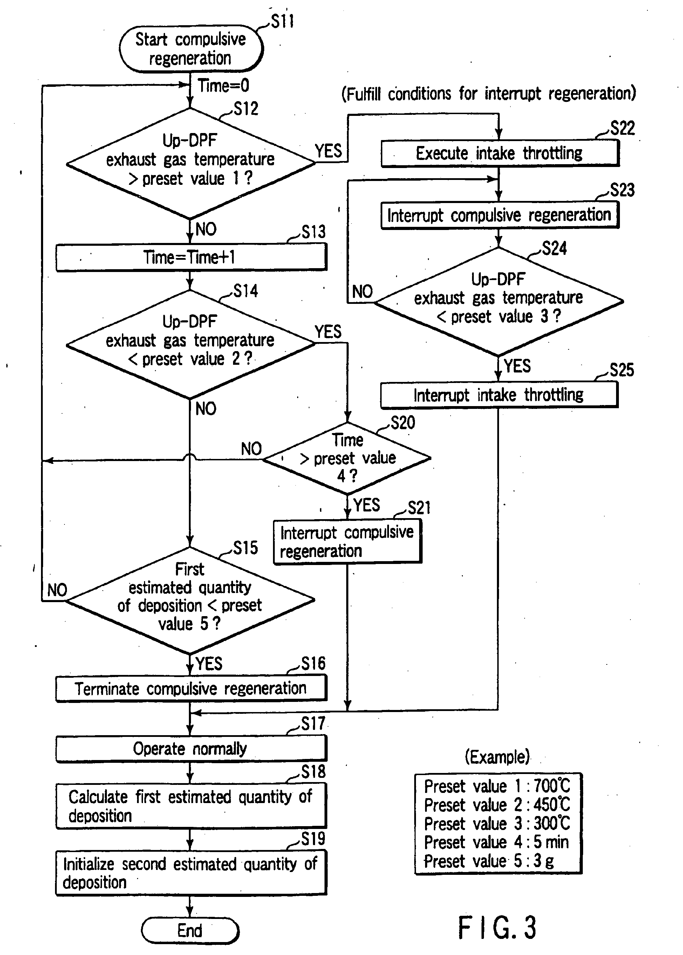

Further, a program for executing a regeneration end discriminating process during the compulsive regeneration process is incorporated in the control unit 16. When the compulsive regeneration process is executed in Step S6 in the flowchart of FIG. 2, the regeneration end discriminating process is executed according to the flowchart of FIG. 3.

The control unit 16 serves also as regeneration interrupting means and control means for filter regenerating means according to this invention.

The following is a description of the regeneration end discriminating process of the exhaust emission control device 10.

When compulsive regeneration is started, the regeneration end discriminating process is executed according to the flowchart of FIG. 3.

First, in Step S12 in FIG. 3, whether or not a preset value 1 (e.g., 700°C) is exceeded by the exhaust gas temperature near and on the upper-stream side of the filter 44 that is detected by means of the temperature sensor 53. If the decision in Step S12 is "NO", that is, if the preset value 1 is not exceeded, it is concluded that a condition for regeneration interruption is not fulfilled. Thereupon, a timer is updated in Step S13, and the program advances to Step S14.

In Step S14, whether or not the exhaust gas temperature near and on the upper-stream side of the filter 44 is lower than a preset value 2 (e.g., 450°C) is determined. If the decision in Step S14 is "NO", that is, if the exhaust gas temperature is not lower than the preset value 2, it is concluded that the compulsive regeneration is advanced, and the program advances to Step S15.

In Step S15, whether or not the first estimated quantity of deposition (a) is smaller than a preset value 5 is determined. If the decision in Step S15 is "NO", that is, if the first estimated quantity is not smaller than the preset value 5, it is concluded that soot is not burned up. Thereupon, the program returns to Step S12, and the regeneration is continued. If the decision in Step S15 is "YES", that is, if the first estimated quantity of deposition (a) is smaller than the preset value 5, it is concluded that the compulsive regeneration is finished. Thereupon, the compulsive regeneration is terminated in Step S16, and normal operation is performed in Step S17. Then, the first estimated quantity of deposition (a) is calculated according to the map M1 in Step S18, and it is assigned as the initial value of the second estimated quantity of deposition (b) in Step S19.

If the decision in Step S14 is "YES", that is, if the exhaust gas temperature is lower than the preset value 2, it is concluded that the compulsive regeneration is abnormal, whereupon the program advances to Step S20. If it is concluded in Step S20 that a preset value 4 (e.g., 5 minutes) is not passed by the timer, the program returns to Step S12. If it is concluded in Step S20 that the preset value 4 is passed by the timer, the compulsive regeneration is interrupted in Step S21. Thereafter, the program advances to Step S17, whereupon the normal operation is restored.

If the decision in Step S12 is "YES", that is, if the exhaust gas temperature is higher than the preset value 1, it is concluded that the exhaust gas temperature is too high not to interrupt the compulsive regeneration, whereupon the program advances to Step S22.

In Step S22, the throttle 33 is worked to effect intake throttling by means of the actuator 34. More specifically, the control unit 16 actuates the throttle 33 and the actuator 34, for use as the intake air quantity reducing means, to reduce the quantity of intake air. If the throttle 33 is worked, the quantity of intake air is reduced, so that the oxygen concentration of the exhaust gas that reaches the filter 44 lowers immediately. Thus, the combustion temperature of soot in the filter 44 lowers.

After the intake throttling operation is performed, the program advances to Step S23. In Step S23, a process for interrupting the compulsive regeneration, e.g., operation to stop post-injection, is executed. If the post-injection is stopped, the fuel that reaches the oxidizing catalyst 43 lessens, so that the temperature of the catalyst 43 lowers. Thus, the temperature of the filter 44 lowers, so that the filter 44 can be prevented from being melted down.

If the compulsive regeneration is interrupted in Step S23, whether or not the exhaust gas temperature near and on the upper-stream side of the filter 44 is lower than a preset value 3 (e.g., 300°C) is determined in Step S24. If the decision in Step S24 is "NO", that is, if the exhaust gas temperature is not lower than the preset value 3, the program returns to Step S23, whereupon the intake throttling and the compulsive regeneration interrupting operation are maintained.

When the exhaust gas temperature lowered by the compulsive regeneration interrupting operation of Step S23 becomes lower than the preset value 3 in Step S24, the program advances to Step S25, whereupon the intake throttling is interrupted. In Step S25, the actuator 34 is controlled so that the opening of the throttle 33 corresponds to accelerating operation. Then, the normal operation is restored in Step S17.

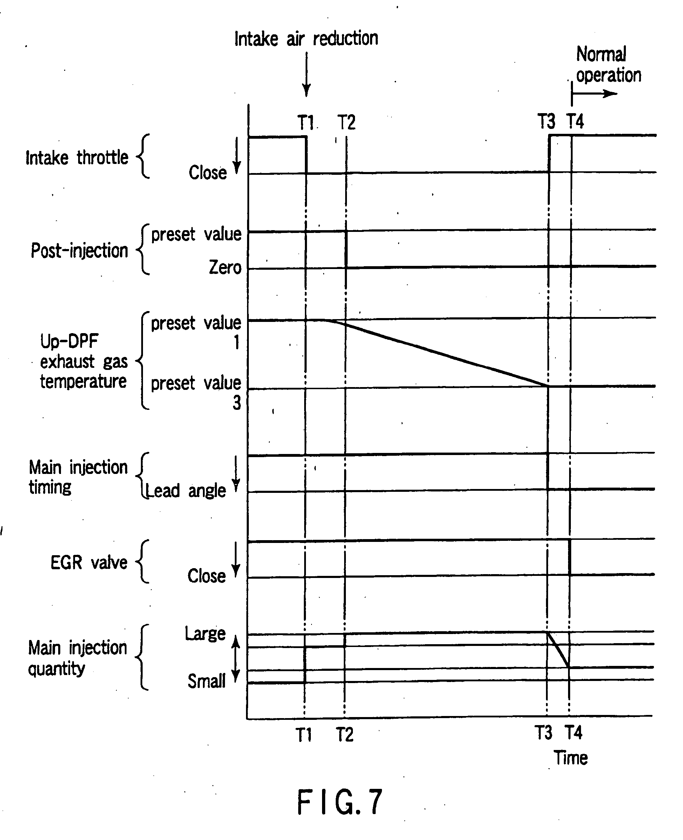

FIG. 7 is a time chart corresponding to Step S12, Steps S22 to S25, and Step S17 for the normal operation in the regeneration end discriminating process (FIG. 3) described above. If the condition for regeneration interruption is fulfilled in Step S12, the throttle 33 is worked at T1 in FIG. 7 (Step S22). As the intake is throttled in this manner, the exhaust gas temperature starts to lower from the preset value 1. At the same time, operation is carried out to increase the main injection quantity, thereby making up for reduction in engine output. Alternatively, the reduction in engine output that is attributable to the intake throttling may be compensated by controlling some other control elements than the quantity of intake air.

After the intake throttling is executed, the post-injection is stopped at T2 in FIG. 7 with some delay. After oxygen supplied to the filter 44 is reduced, in this case, the post-injection is stopped to restrain re-combustion in the filter 44, so that the exhaust gas temperature further lowers. Fluctuations in output can be restrained as the intake is throttled by correcting the injection quantity (main injection quantity) of the engine so as to increase it the moment the post-injection is stopped at T2.

The throttle 33 is controlled for an opening corresponding to the accelerating operation at the point of time (T3) when the exhaust gas temperature is lowered to the preset value 3. As this is done, the control of the main injection timing is switched from the preceding lag angle control over to normal lead angle control, and operation is carried out to interrupt the incremental correction of the injection quantity (or to reduce the main injection quantity). At T4, the EGR valve 23 is closed so that the normal operation state for the main injection quantity is restored.

Control of the post-injection, control of the main injection timing, on-off control of the EGR valve 23, control of the main injection quantity, etc., as well as the on-off control of the throttle 33 described above, are executed according to a processing program in the control unit 16 and in response to detection signals from the temperature sensor 53 and the like.

## Claims

1. An exhaust emission control device of an engine, which has a particulate filter (44) located in an exhaust passage of the engine and capable of capturing particulates in exhaust gas, and filter regenerating means (16) for raising the temperature of the particulate filter (44) to regenerate the particulate filter (44), comprising
- intake air quantity reducing means (33, 34) for reducing the quantity of intake air of the engine,
wherein the filter regenerating means (16) include:
- regeneration interruption discriminating means (S12) for discriminating the fulfillment of a condition for the interruption of the regeneration process for the particulate filter (44); and
- control means (16, S22, S23) adapted to actuate the intake air quantity reducing means (33, 34) and interrupt the regeneration process when the regeneration interruption discriminating means (S12) discriminate the fulfillment of the condition for regeneration interruption during the regeneration process,
**characterized in that** the filter regenerating means (16) include means (S24, S25) for maintaining or stopping actuation of the intake air quantity reducing means (33, 34), and after the interruption of the regeneration process, the means (S24, S25) maintain intake throttling until the temperature of the exhaust gas on an upper-stream side of the particulate filter (44) is lowered below a preset value, and stop the actuation of the intake air quantity reducing means (33, 34) when the temperature of the exhaust gas on the upper-stream side of the particulate filter (44) becomes lower than the preset value.

2. A control device according to claim 1,
**characterized in that** the control means (16) interrupt the regeneration by means of the filter regenerating means (16) after actuating the intake air quantity reducing means (33, 34) when the regeneration interruption discriminating means (S12) discriminate the fulfillment of the condition for regeneration interruption.

3. The control device according to claim 1,
**characterized in that** the regeneration interruption discriminating means (S12) are based on the condition for regeneration interruption that the exhaust gas temperature near the particulate filter (44) is higher than a preset conditional temperature for interruption.

4. The control device according to claim 3,
**characterized in that** the control means (16) stop the operation of the intake air quantity reducing means (33, 34) when the exhaust gas temperature near the particulate filter (44) falls below a preset temperature lower than the conditional temperature for interruption.

5. The control device according to claim 1,
**characterized in that** the control means (16) control some other control elements than the quantity of intake air so that the torque of the engine increases as the intake air quantity reducing means (33, 34) are actuated under the condition for regeneration interruption.

6. The control device according to claim 5,
**characterized in that** the control means (16) increase the engine torque by increasing the injection quantity of the engine as the intake air quantity reducing means (33, 34) are actuated under the condition for regeneration interruption.

7. The control device according to claim 1,
**characterized in that** the particulate filter (44) is located on the lower-stream side of an oxidizing catalyst (43) in the exhaust passage of the engine,
and **in that** the filter regenerating means (16) control fuel injection of the engine so as to carry out post-injection such that a fuel is injected in the expansion or exhaust stroke of the engine, whereby the particulate filter (44) is heated up by oxidizing the fuel injected by the post-injection with the oxidizing catalyst (43).

8. The control device according to claim 1,
**characterized in that** the filter regenerating means include catch detecting means (S1) for estimating or detecting the catch of the particulates captured by the particulate filter (44), and carry out the regeneration process when the catch by the catch detecting means (S1) exceeds a given value.

## Patentansprüche

1. Abgasemissions-Steuervorrichtung eines Motors, der ein in einer Abgaspassage des Motors vorgesehenes Partikelfilter (44) aufweist und in der Lage ist, Partikel im Abgas aufzufangen, und der Filter-Regeneriereinrichtungen (16) zum Anheben der Temperatur des Partikelfilters (44) aufweist, um das Partikelfilter (44) zu regenerieren, wobei die Abgasemissions-Steuervorrichtung folgendes aufweist:
- Ansaugluftmengen-Reduziereinrichtungen (33, 34) zum Reduzieren der Ansaugluftmenge des Motors,
wobei die Filter-Regeneriereinrichtungen (16) folgendes aufweisen:
- Regeneriervorgangsunterbrechungs-Erkennungseinrichtungen (S 12) zum Erkennen des Erfüllens einer Bedingung für die Unterbrechung des Regeneriervorgangs für das Partikelfilter (44); und
- Steuereinrichtungen (16, S22, S23), die dazu ausgebildet sind, die Luftansaugmengen-Reduziereinrichtungen (33, 34) zu betätigen und den Regeneriervorgang zu unterbrechen, wenn die Regeneriervorgangsunterbrechungs-Erkennungseinrichtungen (S 12) die Erfüllung der Bedingung für die Regeneriervorgangsunterbrechung während des Regeneriervorgangs erkennen,
**dadurch gekennzeichnet,**
**daß** die Filterregeneriereinrichtungen (16) Einrichtungen (S24, S25) zum Aufrechterhalten oder zum Stoppen der Betätigung der Ansaugluftmengen-Reduziereinrichtungen (33, 34) aufweisen und nach der Unterbrechung des Regeneriervorgangs die Einrichtungen (S24, S25) eine Ansaugdrosselung aufrechterhalten, bis die Temperatur des Abgases auf einer strömungsaufwärtigen Seite des Partikelfilters (44) unter einen vorgegebenen Wert abgesenkt ist, und die Betätigung der Ansaugluftmengen-Betätigungseinrichtungen (33, 34) stoppen, wenn die Temperatur des Abgases auf der strömungsaufwärtigen Seite des Partikelfilters (44) niedriger wird als der vorgegebene Wert.

2. Steuervorrichtung nach Anspruch 1,
**dadurch gekennzeichnet,**
**daß** die Steuereinrichtungen (16) den Regeneriervorgang durch die Filterregeneriereinrichtungen (16) nach der Betätigung der Ansaugluftmengen-Reduziereinrichtungen (33, 34) unterbrechen, wenn die Regeneriervorgangunterbrechungs-Erkennungseinrichtungen (S 12) das Erfüllen der Bedingung für eine Regeneriervorgangunterbrechung erkennen.

3. Steuervorrichtung nach Anspruch 1,
**dadurch gekennzeichnet**,
die Regeneriervorgangsunterbrechungs-Erkennungseinrichtungen (S 12) auf der Bedingung für eine Regeneriervorgangsunterbrechung basieren, daß die Abgastemperatur in der Nähe des Partikelfilters (44) höher ist als eine vorgegebene Bedingungstemperatur für die Unterbrechung.

4. Steuervorrichtung nach Anspruch 3,
**dadurch gekennzeichnet,**
**daß** die Steuereinrichtungen (16) den Betrieb der Ansaugluftmengen-Reduziereinrichtungen (33, 34) stoppen, wenn die Abgastemperatur in der Nähe des Partikelfilters (44) unter eine vorgegebene Temperatur absinkt, die niedriger ist als die Bedingungstemperatur für die Unterbrechung.

5. Steuervorrichtung nach Anspruch 1,
**dadurch gekennzeichnet,**
**daß** die Steuereinrichtungen (16) einige andere Steuerelemente als die Ansaugluftmenge steuern, so daß das Drehmoment des Motors zunimmt, wenn die Ansaugluftmengen-Reduziereinrichtungen (33, 34) unter der Bedingung für eine Regeneriervorgangsunterbrechung betätigt werden.

6. Steuervorrichtung nach Anspruch 5,
**dadurch gekennzeichnet,**
**daß** die Steuereinrichtungen (16) das Motordrehmoment erhöhen, indem die Einspritzmenge des Motors bei der Betätigung der Ansaugluftmengen-Reduziereinrichtungen (33, 34) unter der Bedingung für eine Regeneriervorgangsunterbrechung erhöht wird.

7. Steuervorrichtung nach Anspruch 1,
**dadurch gekennzeichnet,**
**daß** sich das Partikelfilter (44) auf der strömungsabwärtigen Seite eines Oxidationskatalysators (43) in der Abgaspassage des Motors befindet,
und **daß** die Filterregeneriereinrichtungen (16) den Kraftstoffeinspritzvorgang des Motors steuern, um eine Nachinjektion auszuführen, so daß ein Kraftstoff in dem Expansions- oder Auslaßhub des Motors eingespritzt wird, so daß das Partikelfilter (44) durch das Oxidieren des in der Nachinjektion eingespritzten Kraftstoffs mit dem Oxidationskatalysator (43) erhitzt wird.

8. Steuervorrichtung nach Anspruch 1,
**dadurch gekennzeichnet,**
**daß** die Filterregeneriereinrichtungen Auffangmengen-Detektionseinrichtungen (S1) zum Abschätzen oder Detektieren der Auffangmenge der durch das Partikelfilter aufgefangenen Partikel beinhalten und den Regeneriervorgang ausführen, wenn die Auffangmenge der Auffangmengen-Detektionseinrichtungen (S1) einen vorbestimmten Wert überschreitet.

## Revendications

1. Dispositif de commande d'émissions d'échappement d'un moteur, qui comporte un filtre à particules (44) positionné dans un passage d'échappement du moteur et pouvant capturer des particules en suspension dans les gaz d'échappement, et des moyens de régénération de filtre (16) destinés à élever la température du filtre à particules (44) pour régénérer le filtre à particules (44), comprenant
- des moyens de réduction de quantité d'air d'admission (33, 34) pour réduire la quantité d'air d'admission du moteur,
dans lequel les moyens de régénération de filtre (16) comprennent :
- des moyens de détermination d'interruption de régénération (S12) pour déterminer si une condition d'interruption du procédé de régénération du filtre à particules (44) est remplie ; et
- des moyens de commande (16, S22, S23) adaptés pour actionner les moyens de réduction de quantité d'air d'admission (33, 34) et interrompre le procédé de régénération lorsque les moyens de détermination d'interruption de régénération (S12) déterminent que la condition d'interruption de régénération est remplie pendant le procédé de régénération,
**caractérisé en ce que** les moyens de régénération de filtre (16) comprennent des moyens (S24, S25) destinés à maintenir ou arrêter l'actionnement des moyens de réduction de quantité d'air d'admission (33, 34) et, après l'interruption du procédé de régénération, les moyens (S24, S25) maintiennent l'étranglement de l'admission jusqu'à ce que la température des gaz d'échappement présents à un côté amont du filtre à particules (44) soit réduite en dessous d'une valeur préétablie, et arrêtent l'actionnement des moyens de réduction de quantité d'air d'admission (33, 34) lorsque la température des gaz d'échappement au côté amont du filtre à particules (44) devient inférieure à la valeur prédéterminée.

2. Dispositif de commande selon la revendication 1,
**caractérisé en ce que** les moyens de commande (16) interrompent la régénération au moyen des moyens de régénération de filtre (16) après avoir actionné les moyens de réduction de quantité d'air d'admission (33, 34) lorsque les moyens de détermination d'interruption de régénération (S12) déterminent que la condition d'interruption de régénération est remplie.

3. Dispositif de commande selon la revendication 1,
**caractérisé en ce que** les moyens de détermination d'interruption de régénération (S12) sont basés sur la condition d'interruption de régénération selon laquelle la température des gaz d'échappement à proximité du filtre à particules (44) est supérieure à une température conditionnelle d'interruption préétablie.

4. Dispositif de commande selon la revendication 3,
**caractérisé en ce que** les moyens de commande (16) arrêtent le fonctionnement des moyens de réduction de quantité d'air d'admission (33, 34) lorsque la température des gaz d'échappement à proximité du filtre à particules (44) tombe en dessous d'une température préétablie inférieure à la température conditionnelle d'interruption.

5. Dispositif de commande selon la revendication 1,
**caractérisé en ce que** les moyens de commande (16) commandent certains autres éléments à part la quantité d'air d'admission, de sorte que le couple moteur augmente à mesure que les moyens de réduction de quantité d'air d'admission (33, 34) sont actionnés sous la condition d'interruption de régénération.

6. Dispositif de commande selon la revendication 5,
**caractérisé en ce que** les moyens de commande (16) augmentent le couple moteur en augmentant la quantité d'injection du moteur à mesure que les moyens de réduction de quantité d'air d'admission (33, 34) sont actionnés sous la condition d'interruption de régénération.

7. Dispositif de commande selon la revendication 1,
**caractérisé en ce que** le filtre à particules (44) est positionné du côté aval d'un catalyseur à oxydation (43) dans le passage d'échappement du moteur, et **en ce que** les moyens de régénération de filtre (16) commandent l'injection de carburant du moteur de sorte à effectuer la post-injection de manière à ce qu'un carburant soit injecté lors de la course de combustion ou d'échappement du moteur, moyennant quoi le filtre à particules (44) est chauffé par oxydation du carburant injecté par la post-injection par le catalyseur à oxydation (43).

8. Dispositif de commande selon la revendication 1,
**caractérisé en ce que** les moyens de régénération de filtre comprennent des moyens de détection de capture (S1) pour évaluer ou détecter la capture des particules en suspension capturées par le filtre à particules (44), et exécuter le procédé de régénération lorsque la capture évaluée par les moyens de détection de capture (S1) dépasse une valeur donnée.
